# FASCICULE DE BREVET EUROPEEN

(11) **EP 1 688 071 B1**
(45) Date de publication et mention de la délivrance du brevet: **11.03.2009**
(21) Numéro de dépôt: 06290036.0
(22) Date de dépôt: 05.01.2006
(51) Int. Cl.: A47J 27/20

(54) **Systéme de cuisson puis de refroidissement de produits alimentaires par immersion dans un fluide caloporteur**
System zum Kochen und zum Abkühlen von Nahrungsmitteln durch Eintauchen in ein flüssiges Wärmeübertragungsmittel
System for cooking and cooling down of food-products by immersion in a liquid heat transfer medium

(30) Priorité: 17.01.2005 FR 0500490
(43) Date de publication de la demande: 09.08.2006
(73) Titulaire: ARMOR INOX SA, F-56430 Mauron (FR)
(72) Inventeur: Marquet, Olivier, 56430 Mauron (FR); Cadoret, Bernard, 56430 Mauron (FR)
(74) Mandataire: Maillet, Alain

(56) Documents cités:
- US-A- 4 505 192
- US-A- 4 595 296

## Description

La présente invention concerne un système de cuisson puis de refroidissement de produits alimentaires par immersion dans un fluide caloporteur, ledit système étant du type constitué d'une cuve et d'un système d'homogénéisation par insufflation de bulles de gaz.

Un système similaire est connu du document US 4 505 192.

Pour conduire la cuisson de certains produits alimentaires et en particulier celle des jambons, une méthode connue consiste à placer les jambons dans des moules que l'on dépose de manière superposée dans une enceinte laquelle est refermée d'un couvercle. On remplit alors l'enceinte par un fluide caloporteur préalablement chauffé et admis de manière à ce qu'il puisse cuire convenablement les jambons. Après cuisson, on vidange l'enceinte de son fluide puis on la remplit d'un fluide préalablement réfrigéré pour ensuite refroidir les jambons qui ont été cuits. A l'issue du refroidissement, on vidange de nouveau l'enceinte, on retire le couvercle et on extrait les moules de l'enceinte que l'on évacue vers une aire de démoulage des jambons.

Pour homogénéiser la température du fluide caloporteur dans une telle enceinte aussi bien dans la phase de cuisson que dans la phase de refroidissement de manière notamment à mieux contrôler lesdites phases, il est connu d'utiliser des moyens d'homogénéisation par insufflation de bulles de gaz dans le fluide contenu dans ladite enceinte. Plus précisément, des bulles, généralement, d'air sont ainsi injectées dans le fluide caloporteur au niveau inférieur de l'enceinte ce qui crée un brassage continuel ascendant dans celui-ci si bien que la température mesurée du fluide, à différents niveaux à l'intérieur de l'enceinte, est homogène.

Le problème que pose néanmoins ce type de moyens d'homogénéisation par insufflation de bulles de gaz est l'échange de chaleur qui peut s'opérer entre le gaz des bulles et le fluide caloporteur. En effet, le gaz utilisé pour l'insufflation des bulles est à une température, par exemple la température ambiante, qui n'est jamais celle du fluide caloporteur. Ainsi, généralement dans le cas d'un gaz à température ambiante, dans la phase de cuisson, le fluide caloporteur est refroidi par le gaz insufflé et, réciproquement, dans la phase de refroidissement, le fluide caloporteur est réchauffé. Il en résulte un allongement des phases mentionnées ci-dessus à moins qu'une compensation par un apport supplémentaire de calories ou de frigories (selon le cas) au fluide caloporteur soit mise en oeuvre, ce qui entraîne néanmoins une consommation excessive d'énergie.

Le but de l'invention est donc de proposer une enceinte destinée à contenir un fluide caloporteur pour cuire ou refroidir par immersion des produits alimentaires, ladite enceinte étant pourvue de moyens d'homogénéisation par insufflation de bulles de gaz qui ne présente pas les inconvénients précités.

A cet effet, un système de cuisson puis de refroidissement de produits alimentaires par immersion dans un fluide caloporteur, ledit système étant constitué d'une cuve destinée à contenir ledit fluide caloporteur et d'un système d'homogénéisation par insufflation de bulles de gaz dans ledit fluide caloporteur au moyen d'un système de formation de bulles de gaz. Il est caractérisé en ce que ladite cuve est fermée par un couvercle de manière à laisser un espace au-dessus du niveau maximal de la surface libre dudit fluide caloporteur, et en ce que ledit système d'homogénéisation comporte un système de circulation fermée du gaz contenu dans ledit espace vers ledit système prévu pour générer des bulles de gaz dans ledit fluide caloporteur.

Avantageusement, lorsque ledit système de cuisson comporte un système de brassage prévu pour établir un circuit fermé de circulation du fluide caloporteur passant par ladite cuve, ledit système de circulation fermée du gaz contenu dans ledit espace vers ledit système de formation de bulles est constitué par un dispositif à Venturi dans ledit circuit de circulation du fluide caloporteur établi par ledit système de brassage.

Avantageusement, le fluide caloporteur mis en circulation par le système de brassage traverse ledit système de formation de bulles.

Dans un mode de réalisation avantageux, ledit système de formation de bulles comprend au moins un répartiteur constitué d'une plaque s'étendant sur la paroi de fond de ladite cuve et percée d'une multitude de trous.

Dans un autre mode de réalisation, ledit système de formation de bulles comprend au moins un répartiteur constitué d'au moins un coude monté libre à rotation dans le prolongement du débouché dans la cuve dudit circuit fermé de circulation du fluide caloporteur du système de brassage et prévu pour pouvoir tourner pendant l'écoulement du fluide caloporteur.

Avantageusement, le ou chaque débouché dudit circuit fermé de circulation du fluide caloporteur du système de brassage est positionné de manière à ne pas faire saillie sur la face interne de la paroi de fond de ladite cuve. Par exemple, une grille est disposée à la sortie du ou de chaque débouché dans la cuve dudit circuit fermé de circulation du fluide caloporteur du système de brassage.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en coupe d'un système de cuisson de produits alimentaires illustrant le principe de la présente invention,
la Fig. 2 représente une vue en coupe d'un système de cuisson de produits alimentaires selon un mode de réalisation avantageux de la présente invention, et
la Fig. 3 représente une vue en coupe d'une variante de réalisation d'un système de cuisson de produits alimentaires selon un mode de réalisation avantageux de la présente invention.

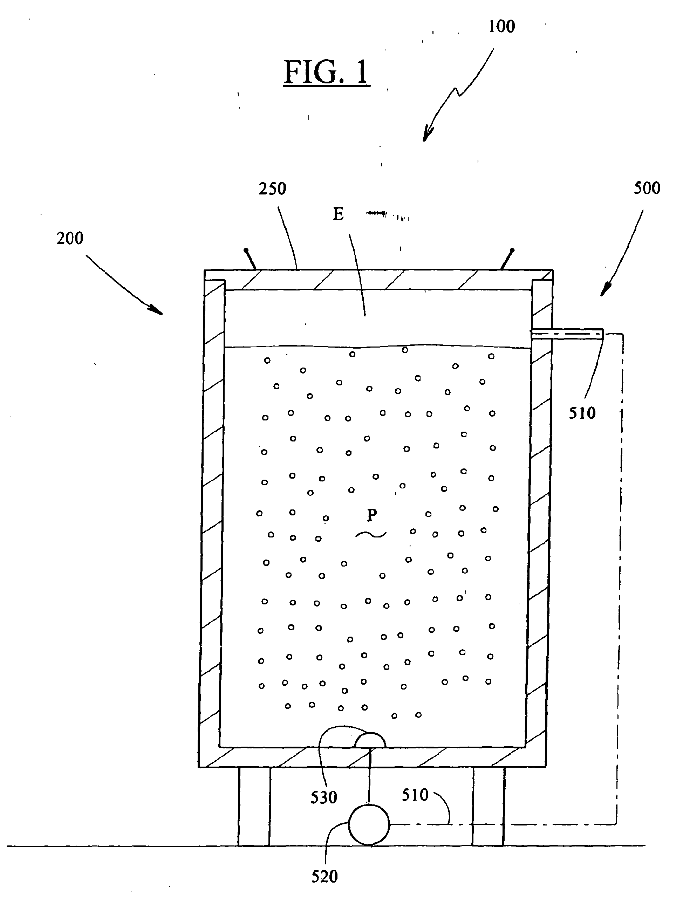

On a représenté à la Fig. 1 un système de cuisson 100 de produits alimentaires qui illustre le principe de la présente invention. Il comprend essentiellement une cuve 200 destinée à contenir un fluide caloporteur P et fermée par un couvercle 250 ainsi qu'un système d'homogénéisation 500 par insufflation de bulles de gaz dans le fluide caloporteur P contenu dans la cuve 200.

Par souci de clarté, on n'a pas représenté, dans cette Fig. 1, le système d'alimentation de la cuve 200 en fluide caloporteur P.

Le système d'homogénéisation 500 par insufflation de bulles de gaz est quant à lui constitué d'une canalisation 510 dont une première extrémité, dite extrémité amont, débouche à l'intérieur de la cuve 200 dans un espace E situé au-dessus du niveau maximal de la surface libre du fluide caloporteur P dans la cuve 200 et dont l'autre extrémité, dite aval, est reliée à l'entrée d'un système 520 de circulation fermée de gaz dont la sortie débouche dans un système de formation de bulles 530. Ce système 530 peut être constitué de tous moyens appropriés permettant la formation de bulles dans un liquide.

Le principe de fonctionnement d'un tel système de cuisson est le suivant. Le gaz contenu dans la cuve 200 au-dessus du niveau du fluide caloporteur P contenu dans la cuve 200 est amené, par le système de circulation 520, à circuler en circuit fermé de l'espace E dans la partie haute de la cuve 200 vers la partie basse de cette dernière où, par le système de formation de bulles 530, il forme des bulles de gaz dans le fluide caloporteur qui, en montant dans le fluide, homogénéise la température de ce dernier avant d'émerger de nouveau dans la partie haute de la cuve. Ainsi, du fait de cette circulation fermée, la température du gaz contenu dans la partie haute de la cuve et formant les bulles de gaz est sensiblement la même que la température du fluide caloporteur. Il en résulte qu'il n'y a plus les échanges thermiques entre bulles et fluide qui caractérisaient les systèmes de cuisson de l'art antérieur et qui occasionnaient des pertes d'énergie calorifique.

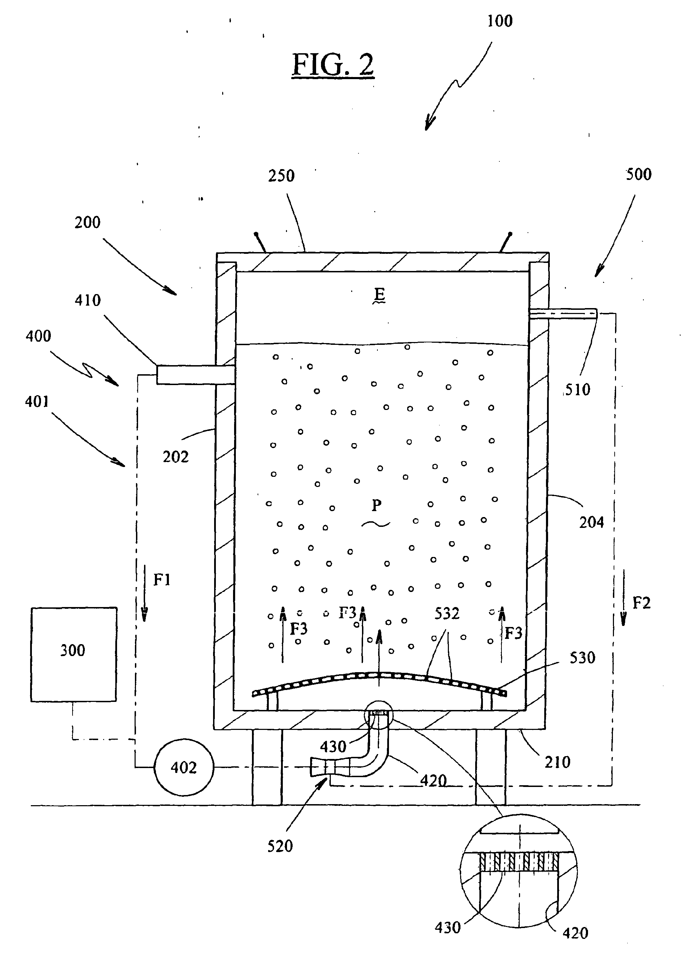

On a représenté à la Fig. 2 un mode de réalisation d'un système de cuisson selon la présente invention mettant en oeuvre le principe illustré à la Fig. 1. Ce système est par exemple destiné à la cuisson de jambons. Bien que seule cette application soit décrite dans la suite de la présente description, on comprendra que la présente invention ne se limite pas à cette application particulière.

Ce système de cuisson 100 comprend essentiellement une cuve 200 destinée à contenir un fluide caloporteur et fermée par un couvercle 250, un système d'alimentation 300 de la cuve 200 en fluide caloporteur, un système de brassage 400 du fluide caloporteur contenu dans la cuve 200 ainsi qu'un système d'homogénéisation 500 par insufflation de bulles de gaz dans le fluide caloporteur contenu dans la cuve 200.

La cuve 200 est constituée d'une enveloppe formant contenant et fermée par le couvercle 250.

Dans l'exemple de réalisation représenté, cette enveloppe est parallélépipédique et comprend des parois latérales 202 et un fond 210. La face de cette enveloppe qui est destinée à être tournée vers le haut est fermée par le couvercle 250 de manière à laisser un espace E au-dessus du niveau maximal de la surface libre dudit fluide caloporteur P. Les parois de la cuve 200 et du couvercle 250 sont isolantes d'un point de vue thermique. La cuve 200 est prévue pour contenir un fluide caloporteur P, tel que de l'eau, dont la température est telle que ce fluide caloporteur, dans une phase de cuisson, permet la cuisson des produits alimentaires immergés dans la cuve 200, et, dans une phase de refroidissement, permet le refroidissement desdits produits alimentaires.. On notera que ces produits alimentaires peuvent être disposés dans des moules appropriés, par exemple, empilés dans la cuve 200.

Le système d'alimentation en fluide 300 permet soit de remplir la cuve 200 d'un fluide caloporteur P jusqu'à un niveau tel que la partie haute de la cuve 200 soit libre pour contenir un gaz, soit de la vidanger. Le système d'alimentation en fluide 300 comprend un dispositif prévu pour chauffer ou refroidir le fluide caloporteur et un dispositif de pompage associé qui n'est pas représenté.

Le système de brassage 400 comprend une pompe 402 raccordée, d'une part, à une conduite d'entrée 410 débouchant dans la cuve 200 au travers d'une paroi latérale 202 et, d'autre part, à une conduite de raccordement 420 débouchant dans la cuve 200 au travers de la paroi de fond 210. La conduite d'entrée 410 débouche dans la cuve 200 à un emplacement situé au-dessous du niveau de remplissage optimum maximal, c'est-à-dire le niveau pour lequel les produits alimentaires contenus dans la cuve 200 sont complètement immergés.

Le fonctionnement de la pompe 402 est tel que le fluide caloporteur P est aspiré au travers de la conduite 410, comme le montrent les flèches F1 à la Fig. 2, et est refoulé dans la cuve 200 créant ainsi un brassage du fluide caloporteur contenu dans la cuve 200, si bien que les différents produits contenus dans la cuve sont immergés dans un fluide dont la température est quasi constante à un instant donné. On obtient ainsi, grâce à cette circulation en boucle du fluide caloporteur dans la cuve 200, une cuisson et un refroidissement quasi identiques pour l'ensemble des jambons contenus dans la cuve 200 et, ce, quel que soit leur placement dans la cuve 200.

Dans le fond de la cuve, on retrouve ledit système de formation de bulles 530 qui ici comprend un répartiteur constitué d'une plaque s'étendant sur la paroi de fond 210 de ladite cuve 200 et percée d'une multitude de trous 532. On retrouve aussi le système de circulation de gaz 520 qui est ici constitué d'un dispositif à Venturi.

On retrouve la canalisation 510 dont une première extrémité, dite extrémité amont, débouche à l'intérieur de la cuve 200 au-dessus du niveau maximal du fluide caloporteur P et dont l'autre extrémité, dite aval, est reliée à l'entrée du dispositif à Venturi.

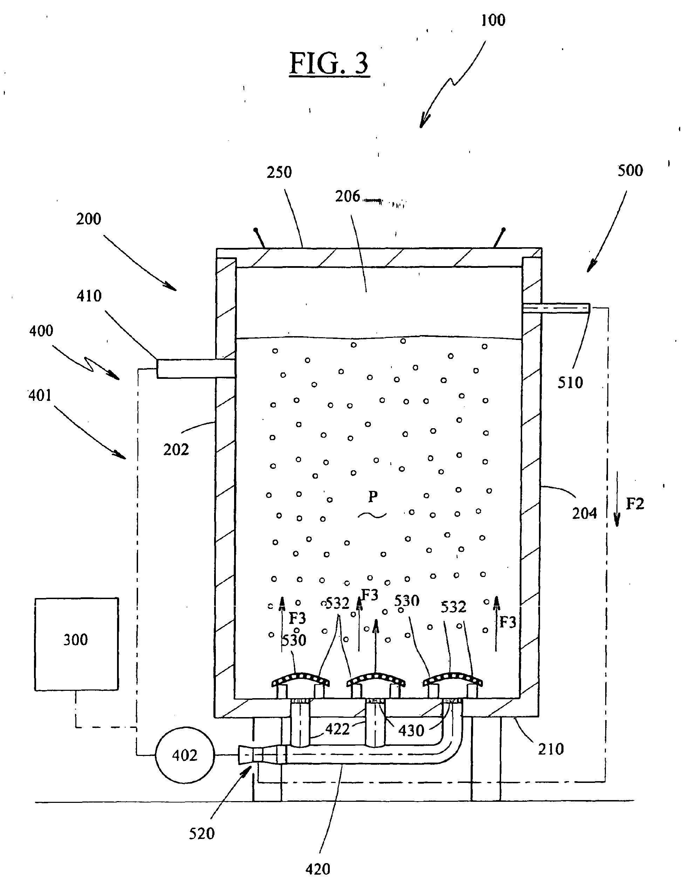

Le fonctionnement de la pompe 402 provoque, comme cela a été décrit ci-dessus, une circulation du fluide caloporteur, notamment dans la conduite de raccordement 420. Cette circulation du fluide caloporteur provoque à son tour, par effet Venturi dans le dispositif à Venturi 520, une aspiration, via la canalisation 510, du gaz présent dans l'espace E situé au-dessus du niveau du fluide caloporteur dans la cuve 200, comme le montrent les flèches F2 à la Fig. 3, et un mélange de ce gaz aspiré au fluide caloporteur dans la canalisation 420. Ce mélange fluide caloporteur- gaz traverse le système de formation de bulles 530 ce qui a pour effet, comme l'indiquent les flèches F3, la formation de bulles de gaz. La température du gaz injecté dans le fluide caloporteur est ainsi sensiblement la même que celle du fluide caloporteur si bien que le brassage du fluide caloporteur par les bulles de gaz ne modifie pas sa température.

L'injection de bulles de gaz dans le système de brassage 400 du fluide caloporteur accroît l'efficacité du brassage du fluide ce qui permet de réduire les durées des phases de cuisson et de refroidissement des produits alimentaires contenus dans la cuve 200.

Un avantage du mode de réalisation de la Fig. 2 réside dans le fait que la génération de bulles dans le fluide caloporteur est réalisée sans qu'il soit nécessaire de mettre en oeuvre une pompe spécifique ou un compresseur pneumatique classiquement utilisés pour injecter l'air dans la cuve ce qui pouvait polluer l'air injecté et par conséquent le fluide caloporteur.

Dans l'exemple décrit en relation avec la Fig. 2, le système de formation de bulles 530 est constitué d'un répartiteur, par exemple une plaque incurvée percée d'une multitude de trous 532 formant un moyen de formation de bulles. On notera qu'il pourrait être constitué de plusieurs de tels répartiteurs.

De même, il pourrait également s'agir d'un coude monté libre à rotation dans le prolongement du débouché de la conduite de raccordement 420 et qui serait susceptible de tourner pendant l'écoulement du fluide caloporteur au travers du débouché de la conduite de raccordement 420. Le moyen d'entraînement en rotation du coude peut prendre la forme d'un orifice réalisé latéralement dans la paroi du coude au niveau de sa sortie, d'un déflecteur placé dans le débouché du coude au niveau de sa sortie.

On notera que le débouché de la conduite de raccordement 420 est sous le répartiteur 530.

Avantageusement, il est positionné de manière à ne pas faire saillie sur la face interne de la paroi de fond 210. Par cette construction, on peut vidanger complètement la cuve 200 quand cela s'avère nécessaire.

Une grille 430 est disposée à la sortie du débouché de la conduite de raccordement 420 dans la cuve 200. Cette grille 430 permet, pendant la vidange, d'éviter la formation d'un effet Vortex dans la veine de fluide caloporteur, la rétention d'éventuels déchets alimentaires contenus dans le fluide caloporteur. Pendant le remplissage de la cuve, la grille 430 permet aussi de calibrer la taille des bulles contenues dans la veine de fluide caloporteur.

On remarquera que les canalisations de remplissage du système d'alimentation en fluide 300 sont raccordées à la conduite de raccordement 420 si bien que lors de l'opération de remplissage de la cuve 200, le fluide caloporteur P est brassé. On remarquera également que lors de l'opération de vidange de la cuve 200, le fluide caloporteur P est évacué au travers de la conduite de raccordement 420 sans passer au travers du système de formation de bulles 530. Une vidange complète de la cuve 200 peut ainsi être réalisée.

Dans une variante de réalisation de l'enceinte 100 représentée à la Fig. 3, au moins une conduite intermédiaire 422 est raccordée avec la conduite de raccordement 420 et débouche au travers de la paroi de fond 210. Deux conduites intermédiaires 422 sont représentées à cette Fig. 3. A l'instar de la conduite de raccordement 420, ces conduites intermédiaires 422 débouchent en vis-à-vis de deux répartiteurs constituant le système de formation de bulles 530. Des grilles 430 peuvent être respectivement disposées à la sortie des débouchés des conduites intermédiaires 422 dans la cuve 200.

Plusieurs répartiteurs 530 peuvent ainsi être disposés parallèlement les uns par rapport aux autres de manière à recouvrir la paroi de fond 210 ce qui permet d'obtenir un brassage du fluide caloporteur dans toute la section transversale de la cuve 200. Dans le cas où les produits alimentaires sont contenus dans des moules empilés, chaque répartiteur 530 est conçu de manière à pouvoir être disposé sous une pile de moules.

Bien que cela ne soit pas représenté, on remarquera qu'un unique répartiteur 530, couvrant globalement la paroi de fond 210 pourrait remplacer l'ensemble des répartiteurs 450 représentés à la Fig. 3.

## Revendications

1. Système de cuisson puis de refroidissement de produits alimentaires par immersion dans un fluide caloporteur, ledit système étant constitué d'une cuve (200) destinée à contenir ledit fluide caloporteur et d'un système d'homogénéisation (500) par insufflation de bulles de gaz dans ledit fluide caloporteur au moyen d'un système de formation de bulles de gaz (530), **caractérisé en ce que**
ladite cuve (200) est fermée par un couvercle (250) de manière à laisser un espace au-dessus du niveau maximal de la surface libre dudit fluide caloporteur, et **en ce que**
ledit système d'homogénéisation (500) comporte un système de circulation fermée (520) du gaz contenu dans ledit espace vers ledit système (530) prévu pour générer des bulles de gaz dans ledit fluide caloporteur.

2. Système de cuisson selon la revendication 1, du type qui comporte un système de brassage (400) prévu pour établir un circuit fermé de circulation du fluide caloporteur passant par ladite cuve (200), **caractérisé en ce que** système de circulation fermée (520) du gaz contenu dans ledit espace vers ledit système de formation de bulles (530) est constitué par un dispositif à Venturi dans ledit circuit de circulation du fluide caloporteur établi par ledit système de brassage (400).

3. Système de cuisson selon la revendication 1 ou 2, **caractérisé en ce que** le fluide caloporteur mis en circulation par le système de brassage (400) traverse ledit système de formation de bulles (530).

4. Système de cuisson selon une des revendications précédentes, **caractérisé en ce que** ledit système de formation de bulles (530) comprend au moins un répartiteur constitué d'une plaque s'étendant sur la paroi de fond (210) de ladite cuve (200) et percée d'une multitude de trous (532).

5. Système de cuisson selon la revendication 3, **caractérisé en ce que** ledit système de formation de bulles (530) comprend au moins un répartiteur constitué d'au moins un coude monté libre à rotation dans le prolongement du débouché dans la cuve (200) dudit circuit fermé de circulation du fluide caloporteur du système de brassage (400) et prévu pour pouvoir tourner pendant l'écoulement du fluide caloporteur.

6. Système de cuisson selon des revendications précédentes, **caractérisé en ce que** le ou chaque débouché dudit circuit fermé de circulation du fluide caloporteur du système de brassage (400) est positionné de manière à ne pas faire saillie sur la face interne de la paroi de fond (210) de ladite cuve (200).

7. Système de cuisson selon la revendication 6, **caractérisé en ce qu'**une grille (430) est disposée à la sortie du ou de chaque débouché dans la cuve (200) dudit circuit fermé de circulation du fluide caloporteur du système de brassage (400).

## Claims

1. System for cooking and then cooling food products by immersion in a heat-carrying fluid, the said system being formed by a vat (200) intended to contain the said heat-carrying fluid and by a system for homogenisation (500) by the insufflation of bubbles of gas into the said heat-carrying fluid by means of a system (530) for forming bubbles of gas, **characterised in that** the said vat (200) is closed off by a lid (250) in such a way as to leave a free space above the maximum level of the free surface of the said heat-carrying fluid, and **in that** the said system for homogenisation (500) comprises a closed-loop system (520) for circulating the gas contained in the said space to the said system (530) which is intended to generate bubbles of gas in the said heat-carrying fluid.

2. Cooking system according to claim 1, of the type which comprises a system (400) for agitation which is intended to set up a closed circuit for the circulation of the heat-carrying fluid which travels through the said vat (200), **characterised in that** the closed-loop system (520) for the circulation of the gas contained in the said space to the said system (530) for forming bubbles is formed by a venturi device in the said circuit for the circulation of the heat-carrying fluid which is set up by the said system for agitation (400).

3. Cooking system according to claim 1 or 2, **characterised in that** the heat-carrying fluid which is caused to circulate by the system for agitation (400) travels through the said system (530) for forming bubbles.

4. Cooking system according to one of the foregoing claims, **characterised in that** the said system (530) for forming bubbles comprises at least one distributor which is formed by a plate which extends over the bottom wall (210) of the said vat (200) and which is pierced by a multitude of holes (532).

5. Cooking system according to claim 3, **characterised in that** the said system (530) for forming bubbles comprises at least one distributor which is formed by an elbow which is mounted to rotate freely on a continuation of the outlet into the vat (200) of the said closed circuit for circulating the heat-carrying fluid of the agitation system (400), and which is intended to be able to rotate during the outflow of the heat-carrying fluid.

6. Cooking system according to the foregoing claims, **characterised in that** the or each outlet of the said closed circuit for circulating the heat-carrying fluid of the agitation system (400) is so positioned as not to project from the inner face of the bottom wall (210) of the said vat (200).

7. Cooking system according to claim 6, **characterised in that** a grille (430) is arranged at the exit of the or each outlet into the vat (200) of the said closed circuit for circulating the heat-carrying fluid of the agitation system (400).

## Patentansprüche

1. System zum Kochen und nachfolgenden Kühlen von Lebensmittelprodukten durch Eintauchen in ein Wärmeübertragungsfluid, bestehend aus einem Behälter (200) zur Aufnahme des Wärmeübertragungsfluids und einem System (500) zum Homogenisieren durch Einblasen von Gasblasen in das Wärmeübertragungsfluid mittels eines Systems (530) zur Bildung von Gasblasen, **dadurch gekennzeichnet, dass**
der Behälter (200) durch einen Deckel (250) derart v**e**rschlossen ist, dass oberhalb des maximalen Niveaus der freien Oberfläche des Wärmeübertragungsfluids ein Zwischenraum verbleibt, und
das Homogenisierungssystem (500) ein geschlossenes System (520) zum Umwälzen des in dem Zwischenraum enthaltenen Gases zu dem System (530) zur Bildung von Gasblasen in dem Wärmeübertragungsfluid aufweist.

2. Kochsystem nach Anspruch 1, aufweisend ein Umwälzsystem (400) zur Bildung eines geschlossenen Umwälzkreises des Wärmeübertragungsfluids, das den Behälter (200) durchläuft, **dadurch gekennzeichnet, dass** das geschlossene System (520) zum Umwälzen des in dem Zwischenraum enthaltenen Gases zu dem Blasenbildungssystem (530) aus einer Venturi-Vorrichtung im Umwälzkreis des Wärmeübertragungsfluids besteht, die durch das Umwälzsystem (400) gebildet ist.

3. Kochsystem nach Anspruch 1 oder 2, **dadurch gekennzeichnet, dass** das Wärmeübertragungsfluid, das durch das Umwälzsystem (400) umgewälzt wird, das Blasenbildungssystem (530) durchquert.

4. Kochsystem nach einem der vorhergehenden Ansprüche, **dadurch gekennzeichnet, dass** das Blasenbildungssystem (530) wenigstens einen Verteiler aufweist, der aus einer Platte besteht, die sich über die Bodenwand (210) des Behälters (200) erstreckt und von mehreren Öffnungen (532) durchsetzt ist.

5. Kochsystem nach Anspruch 3, **dadurch gekennzeichnet, dass** das Blasenbildungssystem (530) wenigstens einen Verteiler aufweist, der wenigstens ein Winkelstück aufweist, das frei drehbar in der Verlängerung des Austritts im Behälter (200) des geschlossenen Umwälzkreises des Wärmeübertragungsfluids des Umwälzsystems (400) angeordnet ist und vorgesehen ist, um sich während des Austritts des Wärmeübertragungsfluids zu drehen.

6. Kochsystem nach einem der vorhergehenden Ansprüche, **dadurch gekennzeichnet, dass** der bzw. jeder Austritt des geschlossenen Umwälzkreises des Wärmeübertragungsfluids des Umwälzsystems (400) derart angeordnet ist, dass er nicht über die Innenfläche der Bodenwand (210) des Behälters (200) vorsteht.

7. Kochsystem nach Anspruch 6, **dadurch gekennzeichnet, dass** ein Gitter (430) im Ausgang des bzw. jedes Austritts im Behälter (200) des geschlossenen Umwälzkreises des Wärmeübertragungsfluids des Umwälzsystems (400) angeordnet ist.
